# FASCICULE DE BREVET EUROPEEN

(11) **EP 2 136 376 B1**
(45) Date de publication et mention de la délivrance du brevet: **21.04.2010**
(21) Numéro de dépôt: 09161889.2
(22) Date de dépôt: 04.06.2009
(51) Int. Cl.: H01B 3/44, C08L 23/06, H01B 7/00

(54) **Câble électrique a haute tension**
Hochspannungsstromkabel
High-voltage power cable

(30) Priorité: 11.06.2008 FR 0853878
(43) Date de publication de la demande: 23.12.2009
(73) Titulaire: Nexans, 75008 Paris (FR)
(72) Inventeur: Mirebeau, Pierre, 75008 PARIS (FR); Matallana, Jérôme, 75008 PARIS (FR); Brame, Jean-François, 75008 PARIS (FR); Janah, Hakim, 75008 PARIS (FR)
(74) Mandataire: Peguet, Wilfried

(56) Documents cités:
- EP-A- 1 128 395
- WO-A-99/35652
- US-A- 4 060 659

## Description

La présente invention se rapporte à un câble électrique comprenant une couche d'isolation électrique à base de polyéthylène et d'un copolymère de styrène.

Elle s'applique typiquement, mais non exclusivement, aux domaines des câbles d'énergie à haute ou à très haute tension à courant continu (HVDC), et des câbles d'énergie à haute ou à très haute tension à courant alternatif (HVAC).

Ces câbles d'énergie sont typiquement des câbles de 60 à 600 kV.

Le document FR 2 805 656 décrit un câble électrique à haute ou à très haute tension à courant continu.

Le câble d'énergie à haute ou à très haute tension et à courant continu (HVDC) comprend un élément conducteur central et, successivement et coaxialement autour de cet élément conducteur, un écran semi-conducteur interne, une couche électriquement isolante extrudée, un écran semi-conducteur externe, un écran métallique de protection et une gaine extérieure de protection.

La couche électriquement isolante extrudée est réalisée à partir d'un mélange comprenant un polyéthylène et un copolymère de styrène, le taux massique de styrène étant compris entre 11 et 18 % dans ledit mélange.

Toutefois, lors de l'extrusion dudit mélange autour de l'élément conducteur, la couche électriquement isolante ainsi formée présente une épaisseur inhomogène, et donc un aspect de surface sensiblement non cylindrique.

Par conséquent, les propriétés diélectriques de la couche électriquement isolante s'en trouvent affectées et ne sont pas identiques sur toute l'épaisseur de ladite couche.

L'invention vise à résoudre les problèmes de l'art antérieur en proposant un câble électrique comprenant une couche électriquement isolante, à base de polyéthylène et d'un copolymère de styrène, ayant des propriétés diélectriques homogènes et optimales sur toute son épaisseur.

A cet effet, l'invention a pour objet un câble électrique comportant un élément conducteur, une couche électriquement isolante, de préférence extrudée, entourant ledit élément conducteur, ladite couche isolante étant obtenue à partir d'un mélange comprenant un polyéthylène et un copolymère de styrène, caractérisé en ce que le polyéthylène est un polyéthylène plurimodal.

Grâce à l'invention, les propriétés diélectriques de la couche électriquement isolante sont optimisées de façon surprenante. En effet, la quantité de charges électriques présente dans ladite couche (ou charges d'espace), notamment la quantité de charges électriques dites piégées dans ladite couche, est minimisée de façon significative en présence de haute ou très haute tension à courant continu, ce qui abaisse considérablement les risques de claquage du câble électrique.

On entend par « polyéthylène plurimodal » un mélange d'au moins deux fractions de polyéthylène produites sous des conditions de polymérisation différentes résultant en des poids moléculaires différents pour chaque fraction.

Lorsque le polyéthylène plurimodal ne comprend que deux fractions de polyéthylènes de poids moléculaires différents, on parle de polyéthylène bimodal.

La nature chimique desdites fractions de différents poids moléculaires peut être identique, à savoir les fractions de polyéthylènes peuvent être par exemple uniquement des fractions de copolymères d'éthylène ou uniquement des fractions d'homopolymères d'éthylène.

La nature chimique de ces fractions peut également être différente. Ainsi, une ou plusieurs fractions peuvent consister en un copolymère d'éthylène, tandis qu'une ou plusieurs autres fractions peuvent consister en un homopolymère d'éthylène

De préférence, la couche électriquement isolante n'est pas réticulée et permet ainsi d'éviter la présence de sous produits de réticulation qui conduisent à l'augmentation de la densité de charges d'espace.

Dans un mode de réalisation particulièrement préféré, le taux massique de styrène est d'au plus 10 % dans ledit mélange, de préférence d'au plus 9 % dans ledit mélange, et plus préférentiellement d'au plus 8 % dans ledit mélange.

Avantageusement, la limite supérieure permet d'obtenir des propriétés diélectriques remarquables et homogènes sur toute l'épaisseur de la couche isolante tout en gardant de bonnes propriétés mécaniques.

Cette limite maximale permet également de garantir une épaisseur constante optimale de la couche électriquement isolante autour de l'élément conducteur, notamment pour des épaisseurs supérieures à 10 mm.

Dans un autre mode de réalisation, le taux massique de styrène est d'au moins 4 % dans le mélange, afin d'avoir un écoulement satisfaisant des charges électriques dans la couche électriquement isolante.

Le polyéthylène utilisé dans le mélange selon la présente invention est de préférence un polyéthylène bimodal.

En outre, le polyéthylène peut être un polyéthylène moyenne ou haute densité, ce qui permet au câble électrique selon la présente invention, notamment au câble d'énergie à haute ou à très haute tension à courant continu, de pouvoir fonctionner de façon optimale à des températures atteignant 80°C.

Le copolymère de styrène dans le mélange selon la présente invention est choisi de préférence parmi les copolymères de styrène et butadiène et de styrène et isoprène, et plus particulièrement il peut être un copolymère tri-séquencé hydrogéné.

Dans un mode de réalisation particulier, la couche isolante du câble électrique selon la présente invention a une épaisseur d'au moins 10 mm.

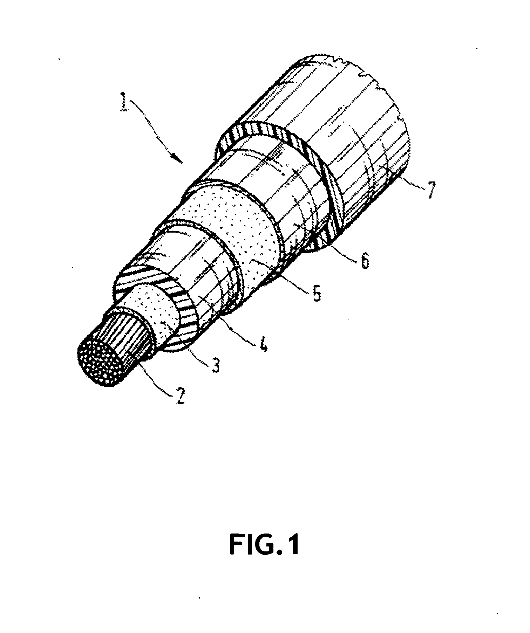

D'autres caractéristiques et avantages de la présente invention apparaîtront à la lumière de la description d'un exemple non limitatif d'un câble électrique selon l'invention fait en référence à la figure 1 représentant une vue schématique en perspective d'un câble électrique selon un mode de réalisation préféré conforme à l'invention.

Pour des raisons de clarté, seuls les éléments essentiels pour la compréhension de l'invention ont été représentés de manière schématique, et ceci sans respect de l'échelle.

Le câble d'énergie 1 à haute ou à très haute tension et à courant continu illustré dans la figure 1 comprend un élément conducteur 2 central et, successivement et coaxialement autour de cet élément, un écran semi-conducteur interne 3, une couche électriquement isolante 4, un écran semi-conducteur externe 5, un écran métallique de protection 6 et une gaine extérieure de protection 7.

La présence des écrans 3, 5 et 6 et de la gaine extérieure de protection 7 est préférentielle. La couche électriquement isolante 4 est réalisée selon la présente invention.

Cette couche électriquement isolante 4 est typiquement extrudée autour de l'élément conducteur 2.

La structure de protection, qui comporte l'écran métallique 6 et la gaine extérieure de protection 7, peut également comporter d'autres éléments de protection tels que notamment une bande de protection, non représentée, gonflante en présence d'eau et semi-conductrice interposée de préférence entre l'écran semi-conducteur externe et l'écran métallique de protection, une armure métallique en fils d'acier positionnée de préférence autour de la gaine extérieure de protection 7, ou des filins en polypropylène positionnés de préférence autour de la gaine extérieure de protection 7.

La structure de protection de ce câble est en tant que telle de type connu et hors du cadre de la présente invention.

Selon l'exemple illustré sur la figure 1, la couche électriquement isolante 4 du câble électrique 1 est non réticulée et est obtenue à partir d'un mélange d'un polyéthylène plurimodal et d'un copolymère de styrène tri-séquencé hydrogéné, le taux massique de styrène étant d'au plus 10 % dans ledit mélange.

En outre, le mélange peut comprendre un antioxydant pour limiter la dégradation dudit mélange lors de sa mise en oeuvre dans une extrudeuse par exemple.

Afin de montrer les avantages obtenus avec les mélanges selon la présente invention, la demanderesse a réalisé différents échantillons de même épaisseur à partir des mélanges détaillés dans le Tableau 1 ci-après, ces échantillons n'étant pas réticulés.

**Tableau 1**

| Mélange M | M-A | M-B | M-C | M-1 |
|---|---|---|---|---|
| HDPE monomodal | 100 | 50 | / | / |
| HDPE plurimodal | / | / | 100 | 75 |
| Copolymère de styrène | / | 50 | / | 25 |
| Taux massique en % de styrène dans le mélange M | 0 | 15 | 0 | 7,5 |

Les mélanges M-A, M-B et M-C correspondent à des mélanges dits comparatifs, tandis que le mélange M-1 correspond à un mélange conforme à la présente invention.

Le polyéthylène monomodal des mélanges comparatifs M-A et M-B est un polyéthylène dont la distribution du poids moléculaire du polyéthylène est monomodale, c'est-à-dire que ledit polyéthylène ne comprend qu'un seul type de fraction de polyéthylène.

L'origine des différents constituants du Tableau 1 est la suivante :
- HDPE monomodal est un polyéthylène haute densité monomodal commercialisé par la société DOW CHEMICAL sous la référence 35057E,
- HDPE plurimodal est un polyéthylène haute densité bimodal commercialisé par la société DOW CHEMICAL sous la référence XZ 89204,
- Copolymère de styrène est un copolymère de styrène-butadiène-styrène (SEBS) à 30% en poids de styrène, commercialisé par la société KRATON POLYMER sous la référence G 1652.

Les constituants respectifs M-A, M-B, M-C et M-1 sont chargés dans une extrudeuse puis extrudés en bandes pour obtenir des échantillons plans respectifs M-A, M-B, M-C et M-1.

La caractérisation des propriétés diélectriques des couches extrudées des échantillons M-A, M-B, M-C et M-1 est effectuée sur des disques de 40 mm de diamètre et de 0,7mm d'épaisseur par plusieurs méthodes qui permettent d'apprécier la tenue diélectrique d'un matériau soumis à une contrainte électrique ou thermique.

### 1. Densité des charges piégées

La méthode utilisée pour déterminer la densité de charges électrique piégées dans la couche électriquement isolante est la méthode dite « miroir », bien connue de l'homme du métier.
Cette méthode consiste à injecter ponctuellement des charges électriques à l'aide d'un microscope électronique à balayage dans les couches extrudées des échantillons M-A, M-B, M-C et M-1 de l'ordre de 11,6 pC. Cette méthode est décrite en détail dans le document " Materials for HVDC extruded cables " - H. JANAH, J. MATALLANA, J.F. BRAME and P. MIREBEAU, S. OUREN. JICABLE 2003.

Comme la densité de charge ne peut pas être infinie, les charges électriques s'étendent naturellement dans la couche électriquement isolante.

Plus la densité de charges piégées est faible, meilleur est le comportement diélectrique sous tension continue de la couche électriquement isolante.

Les résultats sont détaillés dans le Tableau 2 ci-dessous. La densité de charges piégées est exprimée en C/m³ (Coulomb par mètre cube).

**Tableau 2**

| Echantillon M | M-A | M-B | M-C | M-1 |
|---|---|---|---|---|
| Densité de charges piégées (C/m³) | 250 | 120 | 180 | 100 |

Il est possible de déterminer le rendement de piégeage des charges électriques piégées dans la couche électriquement isolante des échantillons M-A, M-B, M-C et M-1.

En effet, lors de l'injection des charges électriques dans la couche électriquement isolante, une partie des charges se disperse dans le volume de ladite couche, l'autre partie des charges est piégée. Cette autre partie correspond à la densité des charges piégées telle que déterminée ci-avant.

Le rendement est donc la quantité de charges piégées par rapport à la quantité totale des charges injectées.

Par conséquent, plus le rendement est faible, moins il y a de charges piégées, et ainsi meilleur est le comportement diélectrique sous tension continue de la couche électriquement isolante.

Les résultats sont détaillés dans le Tableau 3 ci-dessous. Le rendement est exprimé en pourcentage.

**Tableau 3**

| Echantillon M | M-A | M-B | M-C | M-1 |
|---|---|---|---|---|
| Rendement (%) | 86 | 86 | 85 | 51 |

Les résultats des tableaux 2 et 3 montrent de façon surprenante que le mélange M-1 conforme à la présente invention présente de meilleures propriétés diélectriques par rapport aux mélanges M-A, M-B ou M-C. Le mélange M-1 permet ainsi de minimiser la quantité et la densité de charges piégées dans la couche électriquement isolante du câble sous tension continue, ce qui abaisse considérablement les risques de claquage.

### 2. Résistivité en fonction de la température de fonctionnement du câble

La méthode utilisée pour déterminer la résistivité est décrite dans la publication " Resistivity measurements on insulating polymers : The Problem of Conduction Currents under High Voltage ", P. Mirebeau, H. Janah, J. Matallana (Nexans - France), J.C. Filippini (IRLAB, Grenoble - France), R. Coelho 118th Insulated Conductor Committe Metting, fall 2005.

Plus la variation de la résistivité en fonction de la température est importante, plus le gradient de température qui s'établit dans la couche électriquement isolante pendant le fonctionnement du câble génère des charges d'espace.

Par conséquent, il est important d'avoir une variation de la résistivité, en fonction de la température, la plus faible possible.

Les résultats sont détaillés dans le Tableau 4 ci-dessous.

**Tableau 4**

| Echantillon M | M-A | M-B | M-C | M-1 |
|---|---|---|---|---|
| Rapport de la résistivité ρ (Ω.m) à une température de 40°C sur la résistivité ρ (Ω.m) à une température de 80 ° C | 67 | 19 | 21 | 10 |

On observe que l'addition des 7,5 % de styrène de l'échantillon M-1 permet de limiter significativement la variation de la résistivité en fonction de la température par rapport à l'addition des 15 % de styrène de l'échantillon M-B.

### 3. Profondeur des puits de potentiel dans lesquels les charges sont piégées

La méthode utilisée pour déterminer la profondeur des puits de potentiel est la méthode dite « des courants thermo-stimulés » détaillée dans le document " Thermal currents from corona charged mylar ", R.A. CRESSWELL, M.M. PERLMAN, J. Appl. Phys., Vol. 41 n° 3, pp. 2365-2375, 1970.

Cette méthode consiste à mettre les échantillons M-A, M-B, M-C et M-1 sous un champ électrique de 40 kV/mm à 70°C, puis à le refroidir sous ce champ électrique. Ensuite, on les met en court circuit au travers d'un électromètre et on augmente progressivement la température de 25°C à 130°C à la vitesse de chauffe de 2°C/min.

Un courant est observé en fonction de la température et l'on peut en déduire la profondeur du puits de potentiel dans lequel les charges sont piégées

Plus la profondeur de ce puits de potentiel est faible, meilleur est le comportement diélectrique sous tension continue de la couche électriquement isolante.

Les résultats sont détaillés dans le Tableau 5 ci-dessous. Le puits de potentiel est exprimé en eV (électron-volt).

**Tableau 5**

| Echantillon M | M-A | M-B | M-C | M-1 |
|---|---|---|---|---|
| Puits de potentiel (eV) | 1,18 | 1,14 | 1,18 | 1,06 |

On observe que l'addition des 7,5 % de styrène de l'échantillon M-1 présente un puits de potentiel bien inférieur aux échantillons M-A, M-B et M-C, et plus particulièrement M-B.

## Revendications

1. Câble électrique (1) comportant un élément conducteur (2), une couche électriquement isolante (4) entourant ledit élément conducteur (2), ladite couche électriquement isolante (4) étant obtenue à partir d'un mélange comprenant un polyéthylène et un copolymère de styrène, **caractérisé en ce que** le polyéthylène est un polyéthylène plurimodal.

2. Câble électrique selon la revendication 1, **caractérisé en ce que** le taux massique de styrène est d'au plus 10 % dans ledit mélange, de préférence d'au plus 9 % dans le mélange.

3. Câble électrique selon la revendication 1 ou 2, **caractérisé en ce que** le polyéthylène est un polyéthylène bimodal.

4. Câble électrique selon l'une quelconque des revendications précédentes, **caractérisé en ce que** le polyéthylène est un polyéthylène moyenne ou haute densité.

5. Câble électrique selon l'une quelconque des revendications précédentes, **caractérisé en ce que** le copolymère de styrène est choisi parmi les copolymères de styrène et butadiène et de styrène et isoprène.

6. Câble électrique selon l'une quelconque des revendications précédentes, **caractérisé en ce que** le copolymère de styrène est un copolymère tri-séquencé hydrogéné.

7. Câble électrique selon l'une quelconque des revendications précédentes, **caractérisé en ce que** la couche isolante a une épaisseur d'au moins 10 mm.

## Claims

1. An electric cable (1), comprising a conductive element (2), an electrically insulating layer (4) enclosing said conductive element (2), said electrically insulating layer (4) being obtained from a mixture comprising polyethylene and a styrene copolymer, **characterized in that** the polyethylene is multimodal polyethylene.

2. The electric cable according to claim 1, **characterized in that** the mass fraction of styrene is a maximum of 10 % in said mixture, preferably a maximum of 9 % in the mixture.

3. The electric cable according to claim 1 or 2, **characterized in that** the polyethylene is bimodal polyethylene.

4. The electric cable according to any of the preceding claims, **characterized in that** the polyethylene is medium or high density polyethylene.

5. The electric cable according to any of the preceding claims, **characterized in that** the styrene copolymer is chosen from styrene and butadiene copolymers and styrene and isoprene copolymers.

6. The electric cable according to any of the preceding claims, **characterized in that** the styrene copolymer is a hydrogenated trisequenced copolymer.

7. The electric cable according to any of the preceding claims, **characterized in that** the insulating layer has a thickness of at least 10 mm.

## Patentansprüche

1. Stromkabel (1), umfassend ein leitfähiges Element (2), eine elektrisch isolierende Schicht (4), die das leitfähige Element (2) umgibt, wobei die elektrisch isolierende Schicht (4) aus einer Mischung erzielt wird, die ein Polyethylen und ein Styrol-Copolymer umfasst, **dadurch gekennzeichnet, dass** das Polyethylen ein multimodales Polyethylen ist.

2. Stromkabel nach Anspruch 1, **dadurch gekennzeichnet, dass** der Massenanteil von Styrol in der Mischung maximal 10 %, bevorzugt in der Mischung maximal 9 % beträgt.

3. Stromkabel nach Anspruch 1 oder 2, **dadurch gekennzeichnet, dass** das Polyethylen ein bimodales Polyethylen ist.

4. Stromkabel nach einem der vorhergehenden Ansprüche, **dadurch gekennzeichnet, dass** das Polyethylen ein Polyethylen mittlerer oder niedriger Dichte ist.

5. Stromkabel nach einem der vorhergehenden Ansprüche, **dadurch gekennzeichnet, dass** das Styrol-Copolymer aus Styrol- und Butadien-Copolymeren und Styrol- und Isopren-Copolymeren gewählt wird.

6. Stromkabel nach einem der vorhergehenden Ansprüche, **dadurch gekennzeichnet, dass** das Styrol-Copolymer ein hydriertes trisequenziertes Copolymer ist.

7. Stromkabel nach einem der vorhergehenden Ansprüche, **dadurch gekennzeichnet, dass** die Isolierschicht eine Dicke von mindestens 10 mm aufweist.
